(19) Europäisches Patentamt
European Patent Office
Office européen des brevets

(11) **EP 4 596 861 A1**

(12) **EUROPEAN PATENT APPLICATION**
published in accordance with Art. 153(4) EPC

(43) Date of publication:
06.08.2025 Bulletin 2025/32

(21) Application number: 22960838.5

(22) Date of filing: 28.09.2022

(51) International Patent Classification (IPC):
*F02F 5/00* (2006.01)  *F16J 9/26* (2006.01)

(52) Cooperative Patent Classification (CPC):
**F02F 5/00; F16J 9/26**

(86) International application number:
**PCT/JP2022/036046**

(87) International publication number:
**WO 2024/069774 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: TPR CO., LTD.
Tokyo 100-0005 (JP)

(72) Inventors:
• **AOKI, Takashi**
Tokyo 100-0005 (JP)

• **NAGAKURA, Hiroyuki**
Tokyo 100-0005 (JP)
• **OOURA, Shinsuke**
Tokyo 100-0005 (JP)
• **KAWAI, Kiyoyuki**
Tokyo 100-0005 (JP)
• **YONEYAMA, Osamu**
Tokyo 100-0005 (JP)

(74) Representative: **Novagraaf International SA**
Chemin de l'Echo 3
1213 Onex, Geneva (CH)

(54) **PISTON RING**

(57) Provided is a piston ring that is used in an internal combustion engine that uses a hydrogen gas fuel. In the piston ring, the piston ring satisfies $0.75 \leq FPS$ in a case in which: the transverse rupture index of the piston ring in a case in which a transverse test is conducted under a predetermined condition is taken as FP1; the post-corrosion transverse rupture index of the piston ring in a case in which the transverse test is conducted after a corrosion test is conducted in which the piston ring is immersed in a 1% aqueous nitric acid solution for 30 minutes is taken as FP2; and the transverse rupture strength maintenance rate FPS of the piston ring is defined as FPS = FP2/FP1.

Fig.1

EP 4 596 861 A1

**Description**

TECHNICAL FIELD

The present invention relates to a piston ring that is used in an internal combustion engine that uses a hydrogen gas fuel.

BACKGROUND ART

In recent years, reductions in the amount of emitted $CO_2$ and the amount of fossil fuel used have been demanded, and technologies for internal combustion engines that use, as a fuel, hydrogen gas or a fuel in which hydrogen gas and another fuel are mixed (hereinafter, both of which are also collectively referred to as "hydrogen gas fuel") from the viewpoint of environmental loads have been studied.
In this context, for example, Patent Literature 1 discloses, as a member that is used in a hydrogen engine, a member provided with a coating layer including stainless steel as a material to suppress hydrogen embrittlement fracture.
Patent Literature 2 discloses a member for a hydrogen engine, subjected to physical and chemical treatment to prevent the member from rusting due to water vapor generated by combustion of hydrogen gas.
Patent Literature 3 describes that cooling of cylinders, based on the condensation of water vapor, has not been performed in conventional hydrogen engines, and discloses a hydrogen engine for controlling the condensation of water vapor in a cylinder included in a combustion chamber.

RELATED ART DOCUMENTS

PATENT DOCUMENTS

Patent Literature 1: Japanese Utility Model Laid-Open No. 51-137004
Patent Literature 2: Japanese Patent Laid-Open No. 51-081203
Patent Literature 3: Japanese Patent Laid-Open No. 2003-013765

SUMMARY OF THE INVENTION

PROBLEMS TO BE SOLVED BY THE INVENTION

In an internal combustion engine that uses a hydrogen gas fuel, large amounts of $H_2O$ and $NO_x$ may be generated in combustion, the reflux of $H_2O$ may be generated in a cylinder, and corrosive wear caused by condensed water may occur on the upper and lower surfaces of a piston ring, unlike the case of using a gasoline fuel. The insufficient corrosion resistance of the upper and lower surfaces of the piston ring may cause a reduction in the weight of the piston ring in a width direction and the roughening and pitting corrosion of the upper and lower surfaces due to corrosion, resulting in breaking of the piston ring during operation. An objective of the present invention is to provide a piston ring having sufficient strength for resistance to breakage in an internal combustion engine that uses a hydrogen gas fuel.

MEANS FOR SOLVING THE PROBLEMS

The present inventors proceeded with examination for solving the problems described above, and found that the above-described problems can be solved by a piston ring that is used in an internal combustion engine that uses a hydrogen gas fuel, wherein a transverse rupture strength maintenance rate satisfies a predetermined condition in a case in which a predetermined transverse test is conducted. The present invention was thus accomplished.
The present invention is a piston ring that is used in an internal combustion engine that uses a hydrogen gas fuel, wherein

the piston ring satisfies $0.75 \leq$ FPS
in a case in which:

a transverse rupture index of the piston ring in a case in which a transverse test is conducted under a predetermined condition is taken as FP1;
a post-corrosion transverse rupture index of the piston ring in a case in which the transverse test is conducted after a corrosion test is conducted in which the piston ring is immersed in a 1% aqueous nitric acid solution for 30 minutes is taken as FP2; and
a transverse rupture strength maintenance rate FPS of the piston ring is defined as FPS = FP2IFP1.

It is preferable that $0.2 \leq KDA$ is satisfied
in a case in which:
an arithmetic mean roughness of an upper surface of the piston ring after the corrosion test is taken as Ra ($\mu$m); and a first strength maintenance coefficient KDA is defined as KDA = FPS/Ra.

It is preferable that $0.06 \leq KDV$ is satisfied
in a case in which a maximum valley depth of an upper surface of the piston ring after the corrosion test is taken as Rv ($\mu$m), and a second strength maintenance coefficient KDV is defined as KDV = FPS/Rv.

It is preferable that the internal combustion engine is a spark ignition engine.

EFFECTS OF THE INVENTION

In accordance with the present invention, a piston ring having sufficient strength for resistance to breakage in an internal combustion engine that uses a hydrogen gas fuel can be provided.

BRIEF DESCRIPTION OF THE DRAWINGS

[Figure 1] Figure 1 is a schematic view of a fixture that is used in a transverse test. Section (a) of Figure 1 is a cross-sectional schematic view, and section (b) of Figure 1 is a schematic view of an upper surface.
[Figure 2] Figure 2 is a schematic view (top view) for explaining a force point length dg in a transverse test.
[Figure 3] Figure 3 is a schematic view for explaining the shape of an indenter 23 used in a transverse test.

DESCRIPTION OF EMBODIMENTS

One embodiment of the present invention is a piston ring that is used in an internal combustion engine that uses a hydrogen gas fuel. Specific embodiments thereof are described below. However, configurations described in the following embodiments are not intended to limit the technical scope of the invention only to the specific embodiments, unless otherwise specified.

When the piston ring according to the present embodiment is used, the piston ring is attached to a piston ring groove formed in a piston, and is reciprocated while sliding on the inner peripheral surface of a cylinder bore by reciprocation of the piston.

The piston ring according to the present embodiment may be a so-called compression ring such as a top ring or a second ring, or may be an oil ring.

Herein, an "upper surface" of the piston ring refers to a surface closer to a combustion chamber in a case in which the piston ring is fixed to the piston, and a "lower surface" of the piston ring refers to a surface closer to a crank chamber.

Herein, the hydrogen gas fuel refers to a fuel consisting of hydrogen gas (except impurities), or a fuel in which hydrogen gas and another fuel are mixed. The proportion of the hydrogen gas in the whole fuel is 50% or more, or may be 60% or more, or 70% or more.

The piston ring according to the present embodiment is a piston ring that is used in an internal combustion engine that uses a hydrogen gas fuel, wherein the piston ring satisfies $0.75 \leq FPS$ in a case in which: the transverse rupture index of the piston ring in a case in which a transverse test is conducted under a predetermined condition is taken as FP1; the post-corrosion transverse rupture index of the piston ring in a case in which the transverse test is conducted after a corrosion test is conducted in which the piston ring is immersed in a 1% aqueous nitric acid solution for 30 minutes is taken as FP2; and the transverse rupture strength maintenance rate FPS of the piston ring is defined as FPS = FP2/FP1.

The more transverse rupture strength maintenance rate FPS means the less decreasing rate of the transverse rupture index after the corrosion.

When FPS is less than 0.75, a decrease in the transverse rupture strength caused by corrosion is significant, and the piston ring may be broken during operation in use of a hydrogen gas fuel.

When FPS is 0.75 or more, sufficient breakage resistance can be obtained in an internal combustion engine that uses a hydrogen gas fuel even under an environment in which corrosion is prone to occur due to condensed water. For allowing FPS to satisfy the condition described above, the satisfaction can be achieved by appropriately selecting the material and surface treatment of the piston ring.

The transverse test is as follows.

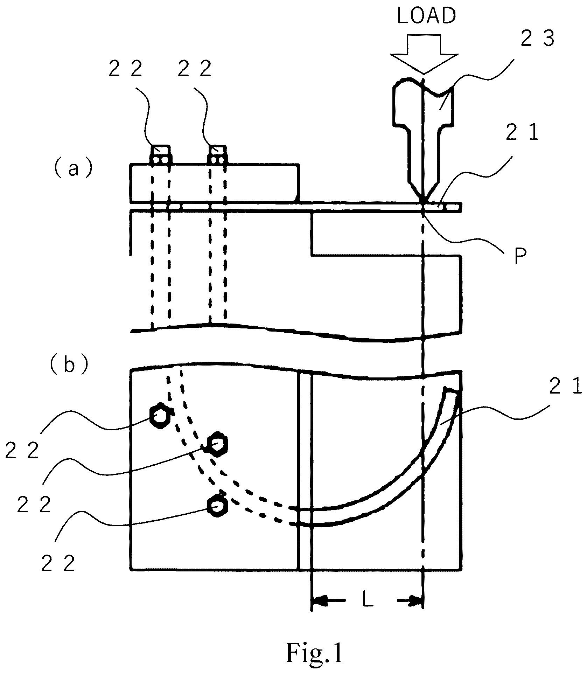

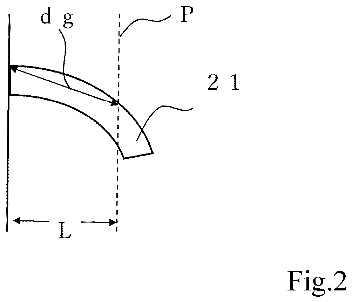

The piston ring is fixed to a fixture illustrated in Figure 1, and the transverse test is conducted using a transverse test machine (autograph). In Figure 1, section (a) is a cross-sectional schematic view of a fixture, and section (b) is a schematic view of the upper surface of the fixture. The transverse test is conducted by fixing the piston ring 21 by a fastener 22 so that the upper surface of the piston ring is directed upward, and a distance L between a force point P and a fulcrum is 15 mm, and applying a load from the upper surface of the piston ring in the axis direction of the piston ring. As illustrated in Figure 2, a force point length dg (mm) is determined from the length of the chord of the piston ring 21 with respect to the distance L between the force point P and the fulcrum. The length of the chord is determined from an outer diameter d (nominal diameter) in a case in which the piston ring is attached to a cylinder bore on the basis of the following equation.

$$\theta a = \sin^{-1} (L/(d/2)) \qquad dg = d \times \sin (\theta a/2)$$

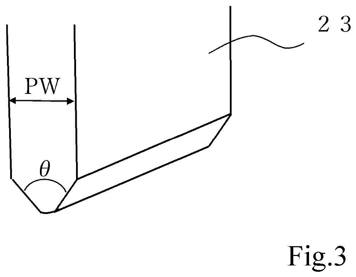

The speed of a test load is set at 1 mm/min. As illustrated in Figure 3, the tip of an indenter 23 has an opening angle $\theta$ of 60 degrees and an indenter width PW of 10 mm, the shape of the tip is allowed to be an R shape, and the radius of R is set at 0.5 mm. In the test, the temperature is allowed to be room temperature, the atmosphere is allowed to be atmospheric air, and the load is detected by an attached load cell.

Here, the maximum width of the piston ring in the axis direction is set at h11 (mm), and the maximum thickness of the piston ring in the diametrical direction is set at a11 (mm). In a case in which the piston ring is broken during the transverse test, the test is ended at the time of the case, and the maximum load until the time is taken as a maximum load F1 (N). When the piston ring is not broken at the time of the indenter 23 dropping to 10 mm, the maximum load until the time is taken as the maximum load F1 (N). A section modulus Z1 ($mm^3$) is set at Z1 = (all × h11 × h11)/6, and a transverse rupture index FP1 ($N/mm^2$) is set at FP1 = (F1 × dg) /Z1.

In the case of conducting the test with the piston ring after a corrosion test described later, the piston ring is fixed so that a portion corroded by the corrosion test arrives at the fulcrum.

The post-corrosion maximum width of the piston ring in the axis direction after the conduction of the corrosion test is set at h12 (mm), the post-corrosion maximum thickness of the piston ring in the diametrical direction after the conduction of the corrosion test is set at a12 (mm), a maximum load in the transverse test after the corrosion test is set at F2 (N), a post-corrosion section modulus Z2 ($mm^3$) is set at Z2 = (a12 × h12 × h12)/6, and a post-corrosion transverse rupture index FP2 ($N/mm^2$) is set at FP2 = (F2 × dg)/Z2.

The corrosion test is as follows.

As an aqueous nitric acid solution used in the corrosion test, an aqueous nitric acid solution obtained by mixing 8 g of nitric acid (1.38) (standard content of 60 to 61%) manufactured by FUJIFILM Wako Pure Chemical Corporation and 492 g of distilled water to have a nitric acid concentration of 1% is used.

A beaker into which the aqueous nitric acid solution is filled is dipped in a water bath to allow the temperature of the aqueous nitric acid solution in the beaker to arrive at 80°C, followed by immersing the piston ring in the aqueous nitric acid solution, stirring the aqueous nitric acid solution every 5 minutes while keeping the liquid temperature at 80°C, and immersing the piston ring for 30 minutes. After 30 minutes, the piston ring taken out is washed with distilled water.

The piston ring according to the present embodiment preferably satisfies $0.2 \leq KDA$ in a case in which the arithmetic mean roughness of the upper surface of the piston ring after the corrosion test is set at Ra ($\mu$m), and the first strength maintenance coefficient KDA ($\mu m^{-1}$) is set at KDA = FPS/Ra.

When KDA is less than 0.2, roughening of a surface state such as pitting corrosion due to corrosion may result in a decrease in transverse rupture strength and may cause the piston ring to be broken during operation. In contrast, when KDA is allowed to be 0.2 or more, a transverse rupture strength maintenance rate after corrosion is increased, or the roughness (breakage origins) of a surface is decreased, and the breakage of the piston ring can be prevented.

For allowing KDA to satisfy the condition described above, the satisfaction can be achieved by appropriately selecting working conditions and surface treatment such as the material and heat treatment of the piston ring, and increasing an FPS value or decreasing Ra.

The piston ring according to the present embodiment preferably satisfies $0.06 \leq KDV$ when the maximum valley depth of the upper surface of the piston ring after the corrosion test is set at Rv ($\mu$m), and a second strength maintenance coefficient KDV ($\mu m^{-1}$) is set at KDV = FPS/Rv.

When KDV is less than 0.06, a decrease in the transverse rupture strength caused by corrosion is significant, and the piston ring may be broken during operation under the influence of the corrosion. In contrast, when KDV is allowed to be 0.06 or more, a transverse rupture strength maintenance rate after corrosion is increased or the roughness (breakage origins) of a surface is decreased, and the breakage of the piston ring can be prevented.

For allowing KDV to satisfy the condition described above, the satisfaction can be achieved by appropriately selecting the material and surface treatment of the piston ring, and increasing an FPS value or decreasing Rv.

For Ra and Rv, the roughnesses of the upper surface of the piston ring were measured at three points at an evaluation length of 4 mm (reference length of 0.8 mm) using a tracer-type surface roughness measurement machine according to ISO 4287, and the average value of the values measured at the three points is used.

The arithmetic mean roughness Ra ($\mu$m) of the upper surface of the piston ring according to the present embodiment after the corrosion test may be 5 $\mu$m or less, or may be 4 $\mu$m or less.

As a method of the surface treatment of the piston ring, a known method can be applied to satisfy the parameters of the preferred surface qualities described above. Examples thereof include film formation surface treatment such as PVD or DLC, chemical conversion treatment, and nitriding treatment.

The maximum valley depth Rv ($\mu$m) of the upper surface of the piston ring according to the present embodiment after the corrosion test may be 14 $\mu$m or less, or may be 12 $\mu$m or less.

The cross-sectional shape of the piston ring according to the present embodiment with respect to a peripheral length direction is not particularly limited, and may be a rectangular shape, or may include an undercut and inner cut. The shape may be a keystone shape.

The size of the closed gap of the piston ring according to the present embodiment is not particularly limited, and an example thereof is a size in a range of 0.1 to 0.8 mm.

The width of the piston ring according to the present embodiment in the axis direction is not particularly limited, and is typically 0.8 mm or more, and typically 4.0 mm or less. The outer diameter d is typically 50 mm or more, and 220 mm or less.

The piston ring according to the present embodiment may include coatings on the upper and lower surfaces thereof. When the piston ring includes the coatings on the upper and lower surfaces thereof, for example, such a coating may be any single coating such as a PVD-treated coating, a DLC coating, a hard chromium plating coating, a nitriding-treated coating, a triiron tetraoxide coating, a phosphate coating, a manganese-based phosphate coating, or a resin coating, or may be a layered coating of any of two or more kinds thereof. The coating may be on only the upper surface or only the lower surface, may be on both the upper and lower surfaces, or may be on a portion of the upper and lower surfaces rather than on the whole upper and lower surfaces.

When the upper surface is provided with a soft coating such as a resin coating, the corrosion test described above is conducted in a state in which the soft coating is peeled.

When the piston ring according to the present embodiment includes coatings on the upper and lower surfaces thereof, the thicknesses of the coatings are not particularly limited, and are typically 0.001 mm or more, and preferably 0.005 mm or more, and are typically 0.1 mm or less, and preferably 0.05 mm or less.

When such a coating includes a DLC coating, the DLC coating may be a DLC coating containing hydrogen, or may be a so-called a hydrogen-free DLC coating.

It is necessary to select a material satisfying the above-described FPS as appropriate, as the material of the base material of the piston ring. An example of a high alloy steel is a martensitic stainless steel. Examples of low alloy steels include valve spring steels and spring steels. Examples of carbon steels include hard drawn steel wires and the like.

EXAMPLES

The present invention is described in more detail below with reference to Examples. However, the present invention is not limited only to the following Examples.

Examples 1 to 17, And Comparative Examples 1 to 3

Piston ring samples with different section moduli, in which the axial lengths (widths) of the piston rings varied from 0.78 to 1.52, and the diametrical thicknesses of the piston rings varied from 1.95 to 3.72, were produced as set forth in Table 1. The materials and upper surface treatments of the samples are different as set forth in Table 1. Samples with the different roughnesses of the upper surfaces were produced under changed treatment conditions such as temperature and time even in the case of the same kind of surface treatment.

These were regarded as Examples 1 to 17, and Comparative Examples 1 to 3.

In Table 1, the surface treatments of the upper surfaces of the piston rings are for: a triiron tetraoxide coating (A); a manganese-based phosphate coating (B); a nitriding-treated coating (C); a phosphate coating (D); and no treatment (E). With regard to the materials, A is low alloy steel, B is high alloy steel, and C is cast iron.

The transverse tests of the piston ring produced in each of Examples and Comparative Examples were conducted before and after the corrosion test, respectively, using the transverse test machine of which the overview is illustrated in Figure 1, to calculate FPS, KDA, and KDV. The results are set forth in Table 1.

The outer diameter d (nominal diameter) of each piston ring used in the test in the case of attaching the piston ring to a cylinder bore was 81 mm. The force point length dg of the piston ring was determined from the calculation of a chord with respect to L, and was dg = 15.3 mm.

[Table 1]

[Table 1]

Table. 1

| | Material | Top surface treatment | Before the corrosion | | | After the corrosion | | | | | Character | | |
|---|---|---|---|---|---|---|---|---|---|---|---|---|---|
| | | | Maximum load | Section modulus | Transverse rupture index | Maximum load | Section modulus | Transverse rupture index | Roughness | | Transverse rupture strength maintenance rate | Strength maintenance coefficient | |
| | | | F1 (N) | Z1 (mm$^3$) | FP1 (N/mm$^2$) | F2 (N) | Z2 (mm$^3$) | FP2 (N/mm$^2$) | Ra (μm) | Rv (μm) | FPS | KDA (μm$^{-1}$) | KDV (μm$^{-1}$) |
| Examples1 | A | A | 184.9 | 0.925 | 3052.447 | 142.3 | 0.880 | 2471.393 | 2.51 | 5.64 | 0.810 | 0.323 | 0.144 |
| Examples2 | A | A | 170.7 | 0.925 | 2819.508 | 141.0 | 0.893 | 2411190 | 2.39 | 5.37 | 0.855 | 0.358 | 0.159 |
| Examples3 | A | A | 159.0 | 0.923 | 2631.338 | 133.3 | 0.886 | 2297.276 | 2.27 | 5.10 | 0.873 | 0.385 | 0.171 |
| Examples4 | A | B | 29.9 | 0.197 | 2366.817 | 21.9 | 0.190 | 1792.506 | 3.45 | 1270 | 0.757 | 0.220 | 0.060 |
| Examples5 | A | B | 28.1 | 0.198 | 2212.941 | 226 | 0.191 | 1844.049 | 3.55 | 13.25 | 0.833 | 0.235 | 0.063 |
| Examples6 | A | E | 207.3 | 1.229 | 2568.345 | 180.1 | 1.182 | 2321060 | 0.74 | 2.17 | 0.904 | 1.221 | 0.416 |
| Examples7 | A | E | 194.2 | 1.228 | 2408.793 | 194.9 | 1.135 | 2616.823 | 0.70 | 206 | 1.086 | 1.545 | 0.527 |
| Examples8 | A | E | 219.9 | 1.229 | 2724.727 | 171.5 | 1.123 | 2325.437 | 0.78 | 2.28 | 0.853 | 1.098 | 0.375 |
| Examples9 | B | E | 57.8 | 0.441 | 2002.874 | 55.9 | 0.425 | 2007.674 | 1.42 | 5.27 | 1.002 | 0.706 | 0.190 |
| Examples10 | B | E | 54.3 | 0.440 | 1888.886 | 59.6 | 0.423 | 2150.996 | 1.35 | 501 | 1.139 | 0.844 | 0.227 |
| Examples11 | B | E | 60.8 | 0.440 | 2111.311 | 52.3 | 0.422 | 1895.868 | 1.49 | 5.53 | 0.898 | 0.602 | 0.162 |
| Examples12 | A | C | 187.8 | 1.174 | 2437.994 | 169.4 | 1.132 | 2278.321 | 4.54 | 11.10 | 0.935 | 0206 | 0.084 |
| Examples13 | A | C | 172.3 | 1.177 | 2229.039 | 183.8 | 1.128 | 2481578 | 4.71 | 11.52 | 1.113 | 0.236 | 0.097 |
| Examples14 | A | C | 163.6 | 1.177 | 2117.882 | 180.4 | 1.133 | 2424.429 | 410 | 10.04 | 1.145 | 0.279 | 0.114 |
| Examples15 | B | C | 89.2 | 0.635 | 2146.280 | 74.1 | 0.574 | 1971.442 | 0.73 | 2.23 | 0.919 | 1.258 | 0.412 |
| Examples16 | B | C | 83.6 | 0.635 | 2010.055 | 77.4 | 0.577 | 2049.253 | 0.69 | 212 | 1.020 | 1.470 | 0.481 |
| Examples17 | B | C | 97.5 | 0.634 | 2349.819 | 82.1 | 0.573 | 2188.360 | 0.77 | 2.34 | 0.931 | 1.215 | 0.398 |
| Comparative Examples 1 | C | D | 37.4 | 0.865 | 657.041 | 228 | 0.844 | 410.383 | 3.92 | 15.11 | 0.625 | 0.159 | 0.041 |

(continued)

| | Material | Top surface treatment | Before the corrosion | | | After the corrosion | | | | | Character | | |
|---|---|---|---|---|---|---|---|---|---|---|---|---|---|
| | | | Maximum load | Section modulus | Transverse rupture index | Maximum load | Section modulus | Transverse rupture index | Roughness | | Transverse rupture strength maintenance rate | Strength maintenance coefficient | |
| | | | F1 (N) | Z1 (mm$^3$) | FP1 (N/mm$^2$) | F2 (N) | Z2 (mm$^3$) | FP2 (N/mm$^2$) | Ra ($\mu$m) | Rv ($\mu$m) | FPS | KDA ($\mu$m$^{-1}$) | KDV ($\mu$m$^{-1}$) |
| Comparative Examples 2 | C | D | 31.9 | 0.862 | 561.845 | 22.9 | 0.847 | 411.094 | 3.81 | 14.10 | 0.732 | 0.192 | 0.052 |
| Comparative Examples 3 | C | D | 33.6 | 0.861 | 593.355 | 23.3 | 0.846 | 418.389 | 3.73 | 14.39 | 0.705 | 0.189 | 0.049 |

Based on the above, the piston ring having sufficient strength for resistance to breakage can be provided even under an environment in which condensed water generated by combustion of a hydrogen gas fuel, in the case of using the piston ring defined in the present invention in an internal combustion engine that uses a hydrogen gas fuel.

REFERENCE SIGNS LIST

21   Piston ring

22   Fastener

23   Indenter

P   Force point

L   Distance between force point P and fulcrum

dg   Force point length

PW   Indenter width

θ   Opening angle

**Claims**

1.   A piston ring that is used in an internal combustion engine that uses a hydrogen gas fuel, wherein

the piston ring satisfies $0.75 \leq FPS$
in a case in which:

a transverse rupture index of the piston ring in a case in which a transverse test is conducted under a predetermined condition is taken as FP1;
a post-corrosion transverse rupture index of the piston ring in a case in which the transverse test is conducted after a corrosion test is conducted in which the piston ring is immersed in a 1% aqueous nitric acid solution for 30 minutes is taken as FP2; and
a transverse rupture strength maintenance rate FPS of the piston ring is defined as FPS = FP2/FP1.

2.   The piston ring according to claim 1, wherein

$0.2 \leq KDA$ is satisfied
in a case in which:

an arithmetic mean roughness of an upper surface of the piston ring after the corrosion test is taken as Ra (μm); and
a first strength maintenance coefficient KDA is defined as KDA = FPS/Ra.

3.   The piston ring according to claim 1, wherein

$0.06 \leq KDV$ is satisfied
in a case in which a maximum valley depth of an upper surface of the piston ring after the corrosion test is taken as Rv (μm), and a second strength maintenance coefficient KDV is defined as KDV = FPS/Rv.

4.   The piston ring according to any one of claims 1 to 3, wherein the internal combustion engine is a spark ignition engine.

Fig.1

Fig.2

PW

$\theta$

2 3

Fig.3

**EP 4 596 861 A1**

## INTERNATIONAL SEARCH REPORT

| International application No. |
| --- |
| **PCT/JP2022/036046** |

| A. | CLASSIFICATION OF SUBJECT MATTER |
| --- | --- |

*F02F 5/00*(2006.01)i; *F16J 9/26*(2006.01)i
FI:    F02F5/00 E; F02F5/00 P; F16J9/26 Z

According to International Patent Classification (IPC) or to both national classification and IPC

| B. | FIELDS SEARCHED |
| --- | --- |

Minimum documentation searched (classification system followed by classification symbols)

F02F5/00; F16J9/26-9/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 57307/1975 (Laid-open No. 137004/1976) (KUBOTA CORPORATION) 05 November 1976 (1976-11-05), pages 1-3 | 1-4 |
| Y | JP 10-130771 A (TOSHIBA TUNGALOY COMPANY, LIMITED) 19 May 1998 (1998-05-19)<br>    paragraphs [0001]-[0025] | 1-4 |
| Y | JP 10-121210 A (NACHI FUJIKOSHI CORPORATION) 12 May 1998 (1998-05-12)<br>    paragraphs [0019]-[0030] | 1-4 |
| Y | JP 51-81203 A (MORITA, Kiyoshi) 16 July 1976 (1976-07-16)<br>    claims | 4 |
| A | JP 2006-70298 A (NIPPON PISTON RING COMPANY, LIMITED) 16 March 2006 (2006-03-16)<br>    entire text | 1-4 |
| A | US 6062569 A (NORTHROP GRUMMAN CORPORATION) 16 May 2000 (2000-05-16)<br>    entire text | 1-4 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 December 2022** | **20 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/036046**

| Patent document cited in search report | | | Publication date (day/month/year) | Patent family member(s) | Publication date (day/month/year) |
|---|---|---|---|---|---|
| JP | 51-137004 | U1 | 05 November 1976 | (Family: none) | |
| JP | 10-130771 | A | 19 May 1998 | (Family: none) | |
| JP | 10-121210 | A | 12 May 1998 | (Family: none) | |
| JP | 51-81203 | A | 16 July 1976 | (Family: none) | |
| JP | 2006-70298 | A | 16 March 2006 | (Family: none) | |
| US | 6062569 | A | 16 May 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51137004 U
- JP 51081203 A
- JP 2003013765 A